# EUROPEAN PATENT APPLICATION

(11) **EP 1 164 588 A2**
(43) Date of publication of application: **19.12.2001**
(21) Application number: 01113543.1
(22) Date of filing: 12.06.2001
(51) Int. Cl.: G11B 20/00, H04N 5/913

(54) **Information outputting apparatus and method, information recording apparatus and method, information outputting recording system and information recording medium**

(30) Priority: 12.06.2000 JP 2000175875
(71) Applicant: Pioneer Corporation, Meguro-ku, Tokyo (JP)
(72) Inventor: Kuroda, Kazuo, Pioneer Corporation, Tokorozawa-shi, Saitama-ken (JP); Moriyama, Yoshiaki, Pioneer Corporation, Tokorozawa-shi, Saitama-ken (JP)
(74) Representative: Reinhard - Skuhra - Weise & Partner

(57) **Abstract**

An information outputting apparatus (BX) for outputting recording information (Sin) to be recorded in a recording medium (1) by an information recording apparatus (R) to the information recording apparatus (R) is provided. In the case that the recording information received in the information outputting apparatus such as a set top box (BX) is transmitted to a recorder (R) and further it is recorded in the recording medium such as a DVD-R (1), at first, after the recording medium (1) is loaded in the recorder (R) and before the recording information is recorded in the recording medium (1), an obtaining device such as a CPU (25) obtains the identification information (ID) of the recording medium (1). Then, an encrypting device (29) encrypts the recording information by using the obtained identification information (ID). Further, an outputting device such as an interface unit (30) outputs the encrypted recording information to the recorder (R).

## Description

### BACKGROUND OF THE INVENTION

### 1. Field of the Invention

The present invention relates to a technical field of an information outputting apparatus and an information outputting method, an information recording apparatus and an information recording method, an information outputting recording system and an information recording medium. More particularly, the present invention relates to a technical field of an information outputting apparatus and an information outputting method, an information recording apparatus and an information recording method, an information outputting recording system including the information outputting apparatus and the information recording apparatus, in which the mutual transmitting and receiving of information are possible. The present invention further relates to an information recording medium in which an information outputting control program or an information recording control program is recorded.

### 2. Description of the Related Art

Conventionally, music information or the like, which has been broadcasted by airwave, is received by a set top box for receiving the broadcasting, then the received music information or the like is recorded in the information recording medium such as an optical disk or the like by using the information recording apparatus.

In recent years, in consideration of the development of image compression technology and high density recording technology, a cinema or the like is distributed via the airwave to be recorded in the information recording medium, for example, a DVD or the like comprising an optical disc, which has severalfold recording capacity compared with the capacity of a conventional CD (Compact Disc).

In the above described distribution of the music information or the like, the problem is how to secure a copyright on the music information or the like. Conventionally, the music information is encrypted twice on a transmission path from the set top box to the above described information recording apparatus and upon recording the music information in the information recording medium. Then, the music information is distributed or recorded.

There has been many cases that a DTCP (Digital Transmission Copy Protection) standard is employed as a standard to secure the copyright on the music information or the like in the case that the music information or the like is transmitted between the set top box and the information recording apparatus in a transmission mode conforming to IEEE 1394 standard (its official name is "IEEE (Institute of Electrical and Electronic Engineers) Std. 1394-1995 IEEE Standard for a High Performance Serial Bus"). On the other hand, as a copyright protection technology to be applied upon recording the music information or the like in the information recording medium, an SDMI (Secure Digital Music Initiative) standard has been employed.

With respect to the above described DTCP standard, DTLA (Digital Transmission Licensing Administrator) releases its content in detail on the internet (its URL is http://www.dtcp/com/).

However, according to the above described conventional constitutions, it is needed to treat both of the above described DTCP standard which is used for receiving the music information or the like from the set top box, and the above described SDMI standard which is used for encryption upon recording the music information or the like in the information recording medium, so that this involves a problem such that the constitution as the information recording apparatus become complicated.

Alternatively, in the apparatus for the use of the above described DTCP standard, the transference which is faster than the normal speed is not capable of being approved by the DTLA at the present time, so that this also involves a problem such that the high-speed transference from the set top box to the information recording apparatus is not capable of being carried out.

### SUMMARY OF THE INVENTION

The present invention has been made taking the foregoing problem into consideration, an object of the invention is to provide an information outputting apparatus and an information outputting method an information recording apparatus and an information recording method, an information outputting recording system including the information outputting apparatus and the information recording apparatus, and an information recording medium recorded with an information outputting control program or an information recording control program, in which it is not needed that the encryption processing and the decryption processing are separately carried out on an output path to the information recording apparatus and upon recording the information in the information recording apparatus, so that the constitution of the information recording apparatus can be simplified, the information is capable of being recorded at the high speed in the information recording medium, and further, the output speed from the information outputting apparatus to the information recording apparatus is capable of being freely set regardless of the standard that is conventionally used.

The above object of the present invention can be achieved by an information outputting apparatus of the present invention for outputting recording information to be recorded in a recording medium by an information recording apparatus to the information recording apparatus. The information outputting apparatus is provided with: an obtaining device for obtaining identification information for identifying the recording medium from the information recording apparatus; an encryption device for encrypting the recording information by the use of the obtained identification information; and an outputting device for outputting the encrypted recording information to the information recording apparatus.

According to the present invention, since the information is encrypted by using the identification information and outputted in the information outputting apparatus, it is not needed that the encryption processing and the decryption processing are separately carried out on an output path from the set top box to the information recording apparatus and upon recording the information in the information recording apparatus. In addition, the constitution of the information recording apparatus can be simplified and the information is capable of being recorded at the high speed in the information recording medium. Further, it is possible to freely set the output speed from the information outputting apparatus to the information recording apparatus regardless of the standard that is conventionally used.

In one aspect of the present invention, the encryption device encrypts the recording information by the encryption processing carried out to the recording information by using the identification information when the recording information is recorded in the recording medium in the information recording apparatus.

According to this aspect, since the information is encrypted by using the identification information for identifying the each recording medium to be outputted, the identification information is necessary in the case of decrypting the encrypted recording information. As a result, it is possible to effectively protect the recording information from being appropriated on the output path to the information recording apparatus.

In another aspect of the present invention, the identification information is identification information for individually identifying the respective recording media.

According to this aspect, since the information is encrypted by using the identification information for identifying the each recording medium to be outputted, the identification information is necessary in the case of decrypting the encrypted recording information. As a result, it is possible to effectively protect the recording information from being appropriated on the output path to the information recording apparatus.

In another aspect of the present invention, the outputting device outputs the encrypted recording information to the information recording apparatus via telecommunication lines.

According to this aspect, it is possible to ensure the high speed and the maintainability upon outputting the encrypted recording information.

The above object of the present invention can be achieved by an information recording apparatus of the present invention for recording the encrypted recording information outputted from an information outputting apparatus in a recording medium, the information outputting apparatus comprising: an obtaining device for obtaining identification information for identifying the recording medium from the information recording apparatus; an encryption device for encrypting the recording information by the use of the obtained identification information; and an outputting device for outputting the encrypted recording information to the information recording apparatus. The information recording apparatus is provided with: an identification information outputting device for outputting the identification information to the information outputting apparatus; a recording information obtaining device for obtaining the encrypted recording information from the information outputting apparatus; and a recording device for recording the obtained encrypted recording information in the recording medium.

According to the present invention, since the encrypted recording information that has been already encrypted is recorded in the recording medium as it is, it is not needed that the encryption processing and the decryption processing are separately carried out on an output path from the information recording apparatus and upon recording the information in the information recording apparatus. As a result, the constitution of the information recording apparatus can be simplified and the information is capable of being recorded at the high speed in the information recording medium. In addition, it is possible to freely set the output speed from the information outputting apparatus to the information recording apparatus regardless of the standard that is conventionally used.

In one aspect of the present invention, the encryption device, which is included in the information outputting apparatus, encrypts the recording information by the encryption processing carried out to the recording information by using the identification information when the recording information is recorded in the recording medium in the information recording apparatus, and the recording device for recording the obtained encrypted recording information in the recording medium in association with the identification information, which is used to generate the encrypted recording information.

According to this aspect, since the encrypted recording information that has been already encrypted is recorded in the recording medium as it is, it is not needed that the encryption processing and the decryption processing are separately carried out on an output path from the information recording apparatus and upon recording the information in the information recording apparatus. As a result, the constitution of the information recording apparatus can be simplified and the information is capable of being recorded at the high speed in the information recording medium. In addition, it is possible to freely set the output speed from the information outputting apparatus to the information recording apparatus regardless of the standard that is conventionally used.

In another aspect of the present invention, the obtaining device obtains the encrypted recording information via the telecommunication lines.

According to this aspect, it is possible to obtain the encrypted recording information with the high speed and the high maintainability.

The above object of the present invention can be achieved by an information outputting recording system of the present invention including an information outputting apparatus for outputting recording information to be recorded in a recording medium to an information recording apparatus and an information recording apparatus for recording the outputted recording information in the recording medium. The information outputting apparatus is provided with: an obtaining device for obtaining identification information for identifying the recording medium from the information recording apparatus; an encryption device for encrypting the recording information by the use of the obtained identification information; and an outputting device for outputting the encrypted recording information to the information recording apparatus. In addition, the information recording apparatus is provided with: an identification information outputting device for outputting the identification information to the information outputting apparatus; a recording information obtaining device for obtaining the encrypted recording information from the information outputting apparatus; and a recording device for recording the obtained encrypted recording information in the recording medium.

According to the present invention, since the information is encrypted by using the identification information in the information outputting apparatus to be outputted to the information recording apparatus, it is not needed that the encryption processing and the decryption processing are separately carried out on an output path to the information recording apparatus and upon recording the information in the information recording apparatus. As a result, the constitution of the information recording apparatus can be simplified and the information is capable of being recorded at the high speed in the information recording medium. Additionally, it is possible to freely set the output speed from the information outputting apparatus to the information recording apparatus regardless of the standard that is conventionally used.

In one aspect of the present invention, the encryption device, which is included in the information outputting apparatus, encrypts the recording information by the encryption processing carried out to the recording information by using the identification information when the recording information is recorded in the recording medium in the information recording apparatus, and the recording device for recording the obtained encrypted recording information in the recording medium in association with the identification information, which is used to generate the encrypted recording information.

According to this aspect, since the encrypted recording information that has been already encrypted is recorded in the recording medium as it is, it is not needed that the encryption processing and the decryption processing are separately carried out on an output path from the information recording apparatus and upon recording the information in the information recording apparatus. As a result, the constitution of the information recording apparatus can be simplified and the information is capable of being recorded at the high speed in the information recording medium. In addition, it is possible to freely set the output speed from the information outputting apparatus to the information recording apparatus regardless of the standard that is conventionally used.

The above object of the present invention can be achieved by an information outputting method of the present invention carried out in an information outputting apparatus for outputting recording information to be recorded in a recording medium by an information recording apparatus to the information recording apparatus. The information outputting method is provided with the processes of: obtaining identification information for identifying the recording medium from the information recording apparatus; encrypting the recording information by the use of the obtained identification information; and outputting the encrypted recording information to the information recording apparatus.

According to the present invention, since the information is encrypted by using the identification information in the information outputting apparatus to be outputted to the information recording apparatus, it is not needed that the encryption processing and the decryption processing are separately carried out on an output path to the information recording apparatus and upon recording the information in the information recording apparatus, the constitution of the information recording apparatus can be simplified and the information is capable of being recorded at the high speed in the information recording medium. Additionally, it is possible to freely set the output speed from the information outputting apparatus to the information recording apparatus regardless of the standard that is conventionally used.

In one aspect of the present invention, the process of encrypting the recording information encrypts the recording information by the encryption processing carried out to the recording information by using the identification information when the recording information is recorded in the recording medium in the information recording apparatus.

According to this aspect, since the information is encrypted by using the identification information for identifying the each recording medium to be outputted, the identification information is necessary in the case of decrypting the encrypted recording information. As a result, it is possible to effectively protect the recording information from being appropriated on the output path to the information recording apparatus.

The above object of the present invention can be achieved by an information recording method of the present invention for recording the encrypted recording information outputted by an information outputting method in a recording medium. The information outputting method is provided with the processes of: obtaining identification information for identifying the recording medium from the information recording apparatus; encrypting the recording information by the use of the obtained identification information; and outputting the encrypted recording information to the information recording apparatus. In addition, the information recording method is provided with the processes of: outputting the identification information to an information outputting apparatus; obtaining the encrypted recording information from the information outputting apparatus; and recording the obtained encrypted recording information in the recording medium.

According to the present invention, since the encrypted recording information that has been already encrypted is recorded in the recording medium as it is, it is not needed that the encryption processing and the decryption processing are separately carried out on an output path from the information recording apparatus and upon recording the information in the information recording apparatus, the constitution of the information recording apparatus can be simplified and the information is capable of being recorded at the high speed in the information recording medium.

In one aspect of the present invention, the process of encrypting the recording information encrypts the recording information by the encryption processing carried out to the recording information by using the identification information when the recording information is recorded in the recording medium in the information recording apparatus, and the process of recording the obtained encrypted recording information records the obtained encrypted recording information in the recording medium in association with the identification information, which is used to generate the encrypted recording information.

According to this aspect, since the encrypted recording information that has been already encrypted is recorded in the recording medium as it is, it is not needed that the encryption processing and the decryption processing are separately carried out on an output path from the information recording apparatus and upon recording the information in the information recording apparatus. As a result, the constitution of the information recording apparatus can be simplified and the information is capable of being recorded at the high speed in the information recording medium. In addition, it is possible to freely set the output speed from the information outputting apparatus to the information recording apparatus regardless of the standard that is conventionally used.

The above object of the present invention can be achieved by an information recording medium of the present invention, in which an information outputting control program for functioning a computer, which is included in an information outputting apparatus for outputting recording information to be recorded in a recording medium by an information recording apparatus to the information recording apparatus, is recorded readable by the computer. The information outputting control program makes the computer function as: an obtaining device for obtaining identification information for identifying the recording medium from the information recording apparatus, an encryption device for encrypting the recording information by the use of the obtained identification information; and an outputting device for outputting the encrypted recording information to the information recording apparatus.

According to the present invention, since the computer functions so that the information is encrypted by using the identification information in the information outputting apparatus to be outputted to the information recording apparatus, it is not needed that the encryption processing and the decryption processing are separately carried out on an output path to the information recording apparatus and upon recording the information in the information recording apparatus. In addition, the constitution of the information recording apparatus can be simplified and the information is capable of being recorded at the high speed in the information recording medium. Further, it is possible to freely set the output speed from the information outputting apparatus to the information recording apparatus regardless of the standard that is conventionally used.

In one aspect of the present invention, the encryption device encrypts the recording information by the encryption processing carried out to the recording information by using the identification information when the recording information is recorded in the recording medium in the information recording apparatus.

According to this aspect, since the information is encrypted by using the identification information for identifying the each recording medium to be outputted, the identification information is necessary in the case of decrypting the encrypted recording information. As a result, it is possible to effectively protect the recording information from being appropriated on the output path to the information recording apparatus.

The above object of the present invention can be achieved by an information recording medium of the present invention, in which an information recording control program for functioning a recording computer, which is included in an information recording apparatus for recording the encrypted recording information outputted from an information outputting apparatus in a recording medium. The information outputting apparatus including a computer functioning as:
an obtaining device for obtaining identification information for identifying the recording medium from the information recording apparatus, an encryption device for encrypting the recording information by the use of the obtained identification information; and
an outputting device for outputting the encrypted recording information to the information recording apparatus. The information recording control program recorded readable by the recording computer. The information recording control program makes the recording computer function as: an identification information outputting device for outputting the identification information to the information outputting apparatus; a recording information obtaining device for obtaining the encrypted recording information from the information outputting apparatus; and a recording device for recording the obtained encrypted recording information in the recording medium.

According to the present invention, since the recording computer functions so that the encrypted recording information that has been already encrypted is recorded in the recording medium as it is, it is not needed that the encryption processing and the decryption processing are separately carried out on an output path from the information recording apparatus and upon recording the information in the information recording apparatus. As a result, the constitution of the information recording apparatus can be simplified and the information is capable of being recorded at the high speed in the information recording medium.

In one aspect of the present invention, the encryption device, which is included in the information outputting apparatus, encrypts the recording information by the encryption processing carried out to the recording information by using the identification information when the recording information is recorded in the recording medium in the information recording apparatus, and the recording device for recording the obtained encrypted recording information in the recording medium in association with the identification information, which is used to generate the encrypted recording information.

According to this aspect, since the encrypted recording information that has been already encrypted is recorded in the recording medium as it is, it is not needed that the encryption processing and the decryption processing are separately carried out on an output path from the information recording apparatus and upon recording the information in the information recording apparatus. As a result, the constitution of the information recording apparatus can be simplified and the information is capable of being recorded at the high speed in the information recording medium. In addition, it is possible to freely set the output speed from the information outputting apparatus to the information recording apparatus regardless of the standard that is conventionally used.

### BRIEF DESCRIPTION OF THE DRAWINGS

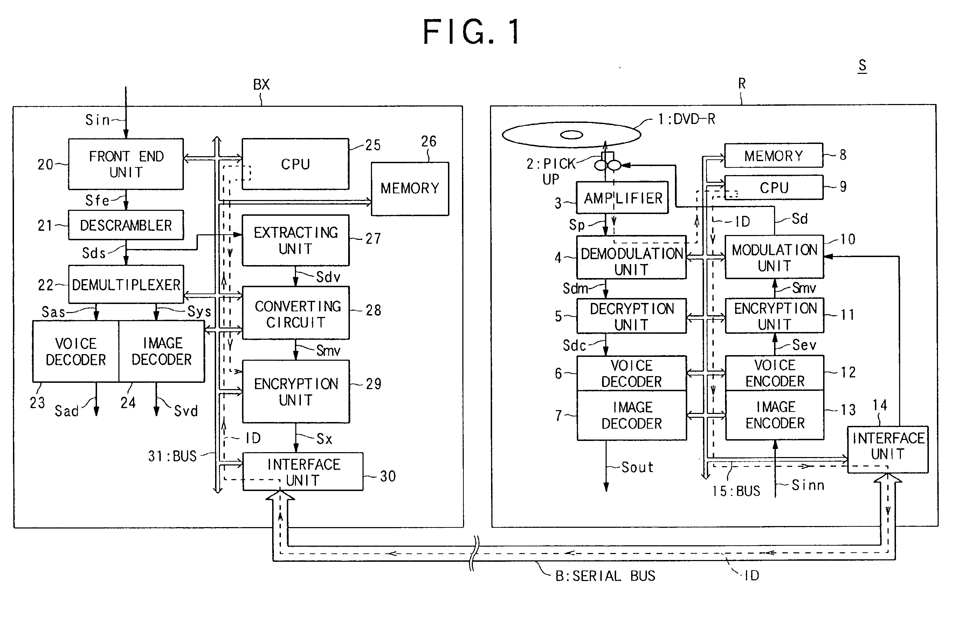

FIG. 1 is a block diagram for showing a schematic constitution of an information recording system according to an embodiment of the present invention.

### DESCRIPTION OF THE PREFERRED EMBODIMENTS

Then, a preferred embodiment of the present invention will be described with reference to FIG. 1. In the embodiment to be described below, the present invention is applied in an information recording system for recording information such as music information or the like which is distributed via the airwave, in a DVD-R that is a recordable optical disc.

As shown in FIG. 1, an information recording system S of the present embodiment is composed of: a set top box BX served as an information outputting apparatus which receives recording information Sin to be transmitted via the airwave from the outside and provides the processing to be described later to the information and outputting it to a recorder R; and the recorder R served as an information recording apparatus which is connected to the set top box BX by a serial bus B that conforms to the IEEE 1394 standard and records the outputted recording information Sin in a DVD-R 1.

Alternatively, the set top box BX is composed of a front end unit 20, a descrambler 21, a demultiplexer 22, a voice decoder 23, an image decoder 24, a CPU 25 as an obtaining device, a memory 26, an extracting unit 27, a converting circuit 28, an encryption unit 29 as an encryption device and an interface unit 30 as an outputting device. These component members are capable of giving and receiving the control information or the like each other via a bus 31.

On the other hand, the recorder R is composed of a pick up 2, an amplifier 3, a demodulation unit 4, a decryption unit 5, a voice decoder 6, an image decoder 7, a memory 8, a CPU 9 as a recording device, a modulation unit 10, an encryption unit 11, a voice encoder 12, an image encoder 13 and an interface unit 14 as an identification information outputting device and a recording information obtaining device. These component members are capable of giving and receiving the control information or the like each other via a bus 15.

Next, the operation of the set top box BX and the recorder R will be described below.

At first, the operation will be schematically described below. The set top box BX of the present embodiment is capable of outputting the received music information or the like to a television set (not shown) or the like as well as outputting the recording information to the recorder R as described above.

Alternatively, the recorder R of the present embodiment not only records the recording information outputted from the set top box BX in the DVD-R 1 but also records recording information Sinn outputted from other apparatuses except for the set top box BX. Further, the recorder R of the present embodiment is also capable of reproducing the music information or the like which has been recorded in the DVD-R 1 up to that time, and outputting it as an output signal Sout to the exterior.

At first, the operation is described in the case that the recording information Sin to be outputted from the exterior is outputted to the above described television set (not shown) in the set top box BX.

In this case, the recording information Sin includes the image information as well as the above described music information. The each information is compressed and encrypted to be inputted.

The front end unit 20 executes a preset receiving processing to the recording information Sin and generates a reception signal Sfe to output it to the descrambler 21.

The descrambler 21 decrypts the codes of the music information and the image information, which are included in the reception signal Sfe, and generates a decryption signal Sds to output it to the demultiplexer 22.

Hereby, the demultiplexer 22 separates the voice information and the image information, which are included in the decryption signal Sds, so that the demultiplexer 22 outputs the separated image information to the image decoder 24 as an image signal Svs as well as outputs the separated voice information to the voice decoder 23 as a voice signal Sas.

The voice decoder 23 decodes the voice signal Sas to output it as a voice output signal Sad to the unillustrated television set.

The image decoder 24 decodes the image signal Svs to output it as an image output signal Svd to the unillustrated television set.

In this case, the CPU 25 generally controls the above respective component members while giving and receiving necessary control information via the bus 30. Alternatively, the information necessary for the general control is temporally stored in the memory 26 via the bus 30, so that this information is used for the general control.

Next, the operation will be described in the case that the recording information Sinn to be inputted from the exterior is recorded in the DVD-R 1 in the recorder R.

In this case, the recording information Sinn is inputted with including the image information as well as the music information, too.

The image encoder 13 executes a preset modulation processing and the encryption processing to the image information in the recording information Sinn and generates the image information to be recorded.

The voice encoder 12 executes a modulation processing, which are in association with the above modulation processing of the image information, and the encryption processing to the voice information in the recording information Sinn and generates the image information to be recorded.

Then, the encryption unit 11 executes a preset encryption processing for recording the information in the DVD-R 1 (specifically, the encryption processing or the like on the basis of the above SDMI standard) to a record signal Sev including the above image information and the voice information to be recorded. Then, the encryption unit 11 generates an encryption record signal Smv to output it to the modulation unit 10.

The modulation unit 10 drives a semiconductor laser device (not shown) for emitting a light beam B for recording provided in the pick up 2 to the DVD-R 1 on the basis of the encryption record signal Smv and generates a strength control signal Sd to emit the light beam B, of which strength is changed in association with the information to be recorded, which is included in the encryption record signal Smv. Then, the modulation unit 10 outputs the generated strength control signal Sd to the pick up 2.

After that, the pick up 2 drives the above semiconductor laser device (not shown) on the basis of the strength control signal Sd and emits the light beam B for recording, so that it records the above image information and the voice information in the DVD-R 1.

In this case, the CPU 9 generally controls the above respective component members while giving and receiving necessary control information via the bus 15. Alternatively, the information necessary for the general control is temporally stored in the memory 8 via the bus 15, so that this information is used for the general control.

According to the above described succession of operations, each information included in the recording information Sinn is recorded in the DVD-R 1.

Next, the operation will be described in the case that the recording information which has been already recorded in the DVD-R 1 is reproduced in the recorder R.

Upon reproducing the recording information, the pick up 2 emits the light beam B with a predetermined strength for reproduction and receives its reflection in a light-receiving unit (not shown). Then, the pick up 2 generates a detecting signal, which changes in association with the change in the strength of the reflection and outputs it to the amplifier 3.

After that, the amplifier 3 executes the amplifying processing, a wave forming processing and the like to the detecting signal. Then, the amplifier 3 generates a reproduction signal Sp to output it to the demodulation unit 4.

The demodulation unit 4 executes a preset demodulation processing to the reproduction signal Sp. Then, the demodulation unit 4 generates a demodulation signal Sdm to output it to the decryption unit 5.

After that, the decryption unit 5 decrypts the encrypted codes of the voice information and the image information, which are included in the demodulation signal Sdm. Then, the decryption unit 5 generates a decryption signal Sdc to output it to the voice decoder 6 and the image decoder 7.

Thus, the voice decoder 6 decodes the voice information included in the decryption signal Sdc to generate a decrypted voice information.

The image decoder 7 decodes the image information, which is included in the decryption signal Sdc, to generate a decrypted image information.

The decrypted voice information and the decrypted image information are collectively outputted to the unillustrated television set as a decrypted output signal Sout.

In this case, the CPU 9 generally controls the above respective component members while giving and receiving necessary control information via the bus 15. Alternatively, the information necessary for the general control is temporally stored in the memory 8 via the bus 15, so that this information is used for the general control.

According to the above described succession of operations, the each information recorded in the DVD-R 1 is reproduced to be outputted to the exterior.

Next, the operation of the set top box BX and the recorder R will be described more specifically.

In the case that the recording information Sin received in the set top box BX is transmitted to the recorder R and further it is recorded in the DVD-R 1, at first, after the DVD-R 1 to be used for recording is loaded in the recorder R and before the recording information is recorded in the DVD-R 1, identification information ID for identifying the DVD-R 1 is optically detected from the DVD-R 1 via the pick up 2 and the demodulation unit 4. Then, the detected identification information ID is outputted to the interface unit 14 via the bus 15 under the control of the CPU 9 and further it is transmitted to the set top box BX via the serial bus B.

In FIG. 1, a broken line represents a flow of the identification information ID.

Here, the identification information ID is recorded in each DVD-R 1 in advance by the use of a publicly known method to individually identify the DVD-R 1 one by one. Further, the identification information ID is outputted to the set top box BX without being provided with any encryption processing.

Next, the identification information ID transmitted to the set top box BX via the serial bus B is stored once in the CPU 25 via the interface unit 30 and the bus 31.

If the recording information Sin is inputted in the set top box BX, the above decryption signal Sds is generated by the operation of the above described front end unit 20 and the descrambler 21 to be outputted to the extracting unit 27.

Thus, the extracting unit 27 only extracts the recording information to be recorded in the DVD-R 1 from the decryption signals Sds to output them to the converting circuit 28 as an extraction signal Sdv.

The converting circuit 28 converts the format in the extraction signal Sdv into a recording format for recording the extraction signal Sdv in the DVD-R 1. Then, the converting circuit 28 generates a conversion signal Smv to output it to the encryption unit 29.

Then, the encryption unit 29 reads out the above described identification information ID stored in the CPU 25, and uses it as an encryption key to encrypt the conversion signal Smv according to the encryption processing as same as the encryption processing upon recording the information in the DVD-R 1 (the encryption processing or the like on the basis of the above described SDMI standard). After that, the encryption unit 29 generates an encryption signal Sx to output it to the interface unit 30.

The interface unit 30 executes the preset interface processing to the encryption signal Sx and output it on the serial bus B to the recorder R.

In this case, the CPU 25 controls the giving and the receiving of the identification information ID in the above described respective component members while giving and receiving of the necessary control information via the bus 15.

Next, in the recorder R which received the encryption signal Sx, at first, the interface unit 14 executes the preset interface processing to the encryption signal Sx transmitted via the serial bus B to output it to the modulation unit 10 as it is.

The modulation unit 10 executes the generation processing of the strength control signal Sd as same as the case of the above described general operation to the encryption signal Sx. Then, the modulation unit 10 outputs the generated strength control signal Sd to the pick up 2.

After that, the pick up 2 drives the above described semiconductor laser device (not shown) on the basis of the strength control signal Sd and emits the light beam B for recording to record the above described recording information Sin in the DVD-R 1.

In this case, the CPU 9 generally controls the above described recording operations while giving and receiving a necessary control information via the bus 15.

According to the above described succession of operations, each information, which is received in the set top box BX and included in the recording information Sinn, is recorded in the DVD-R 1.

As described above, according to the operation of the set top box BX and the recorder R in the present embodiment, after the encryption processing is carried out in the set top box BX by using the identification information ID, the recording information is transmitted to the recorder R to be recorded in the DVD-R 1 as it is. Therefore, it is not needed that the encryption processing and the decryption processing are separately carried out on an output path to the recorder R and upon recording the information in the recorder R, so that the constitution of the information recording apparatus can be simplified, and the information is capable of being recorded at the high speed in the information recording medium.

In addition, it is possible to freely set the output speed from the set top box BX to the recorder R regardless of the DTCP standard that is conventionally used.

Additionally, since the encryption processing is carried out by using the identification information ID for identifying the DVD-R 1 individually, in the case of appropriating the encryption signal Sx to be transmitted and decrypting it, its identification ID is required, so that the encryption signal Sx is capable of being effectively protected from being appropriated on the output path to the recorder R.

In the above described embodiment, the information recording system S, in which the set top box BX and the recorder R are connected to each other via the serial bus B that is a fixed line. However, in addition to this, the present invention may be constituted so that the recording information is given and received one by one at long range via the internet line to record the recording information necessary for the DVD-R 1 by using the internet line in place of the serial bus B as well as the server having the same structure as that of the set top box BX in place of the set top box BX.

Further, in this case, the present invention may be constituted so as to give and receive the information by using one or a plurality of the cable television line, the satellite broadcasting, the ground wave digital line or the like in place of the internet line.

Additionally, as the recording medium in which the recording information is recorded, in addition to the DVD-R 1, other optical discs such as a DVD-RW (DVD-Re-Recordable), a DVD-RAM (DVD-Random Access Memory) or the like, or a solid state memory such as a semiconductor memory or the like may be used.

Alternatively, by recording a controlling program for generally controlling the above described succession of recording processing in respective CPU 9 and CPU 25 in a flexible disc, a hard disc or the like as the information recording medium and reading out the controlling program by a microprocessor or the like as a computer to be carried out, it may be also possible to make a general personal computer, a general server or the like function as the above described CPU 9 or the CPU 25.

The invention may be embodied in other specific forms without departing from the spirit or essential characteristics thereof. The present embodiments are therefore to be considered in all respects as illustrative and not restrictive, the scope of the invention being indicated by the appended claims rather than by the forgoing description and all changes which come within the meaning and range of equivalency of the claims are therefore intended to be embraces therein.

## Claims

1. An information outputting apparatus (BX) for outputting recording information (Sin) to be recorded in a recording medium (1) by an information recording apparatus (R) to the information recording apparatus (R), **characterized in that** the information outputting apparatus comprises:
an obtaining device (25) for obtaining identification information (ID) for identifying the recording medium from the information recording apparatus;
an encryption device (29) for encrypting the recording information by the use of the obtained identification information; and
an outputting device (30) for outputting the encrypted recording information to the information recording apparatus.

2. The information outputting apparatus (BX) according to claim 1, **characterized in that** the encryption device (29) encrypts the recording information by the encryption processing carried out to the recording information by using the identification information when the recording information is recorded in the recording medium in the information recording apparatus.

3. The information outputting apparatus (BX) according to claim 1 or 2, **characterized in that** the identification information (ID) is identification information for individually identifying the respective recording media (1).

4. The information outputting apparatus (BX) according to any one of claims 1 to 3, **characterized in that** the outputting device (30) outputs the encrypted recording information to the information recording apparatus (R) via telecommunication lines.

5. An information recording apparatus (R) for recording the encrypted recording information outputted from an information outputting apparatus (BX) in a recording medium (1), the information outputting apparatus comprising: an obtaining device (25) for obtaining identification information (ID) for identifying the recording medium from the information recording apparatus (R); an encryption device (29) for encrypting the recording information by the use of the obtained identification information; and an outputting device (30) for outputting the encrypted recording information to the information recording apparatus (R), **characterized in that** the information recording apparatus comprises:
an identification information outputting device (14) for outputting the identification information (ID) to the information outputting apparatus (BX);
a recording information obtaining device (14) for obtaining the encrypted recording information from the information outputting apparatus (BX); and
a recording device (9) for recording the obtained encrypted recording information in the recording medium (1).

6. The information recording apparatus (R) according to claim 5, **characterized in that** the encryption device (29), which is included in the information outputting apparatus, encrypts the recording information by the encryption processing carried out to the recording information by using the identification information when the recording information is recorded in the recording medium in the information recording apparatus (R), and the recording device (9) for recording the obtained encrypted recording information in the recording medium (1) in association with the identification information (ID), which is used to generate the encrypted recording information.

7. The information recording apparatus (R) according to claim 5 or 6, **characterized in that** the obtaining device (14) obtains the encrypted recording information via the telecommunication lines.

8. An information outputting recording system (S) including an information outputting apparatus (BX) for outputting recording information to be recorded in a recording medium (1) to an information recording apparatus (R) and an information recording apparatus (R) for recording the outputted recording information in the recording medium (1), **characterized in that**
the information outputting apparatus (BX) comprises:
an obtaining device (25) for obtaining identification information (ID) for identifying the recording medium (ID) from the information recording apparatus (R);
an encryption device (29) for encrypting the recording information by the use of the obtained identification information; and
an outputting device (30) for outputting the encrypted recording information to the information recording apparatus (R),
the information recording apparatus comprises:
an identification information outputting device (14) for outputting the identification information to the information outputting apparatus;
a recording information obtaining device (14) for obtaining the encrypted recording information from the information outputting apparatus; and
a recording device (9) for recording the obtained encrypted recording information in the recording medium.

9. The information outputting recording system (S) according to claim 8, **characterized in that** the encryption device (29) encrypts the recording information by the encryption processing carried out to the recording information by using the identification information when the recording information is recorded in the recording medium (1) in the information recording apparatus (R), and the recording device (9) records the obtained encrypted recording information in the recording medium in association with the identification information, which is used to generate the encrypted recording information.

10. An information outputting method carried out in an information outputting apparatus (BX) for outputting recording information to be recorded in a recording medium (1) by an information recording apparatus (R) to the information recording apparatus (R), **characterized in that** the information outputting method comprises the processes of:
obtaining identification information (ID) for identifying the recording medium from the information recording apparatus (R);
encrypting the recording information by the use of the obtained identification information; and
outputting the encrypted recording information to the information recording apparatus (R).

11. The information outputting method according to claim 10, **characterized in that** the process of encrypting encrypts the recording information by the encryption processing carried out to the recording information by using the identification information when the recording information is recorded in the recording medium (1) in the information recording apparatus (R).

12. An information recording method for recording the encrypted recording information outputted by an information outputting method in a recording medium (1), the information outputting method comprising the processes of: obtaining identification information for identifying the recording medium from the information recording apparatus (R); encrypting the recording information by the use of the obtained identification information; and outputting the encrypted recording information to the information recording apparatus, **characterized in that** the information recording method comprises the processes of:
outputting the identification information to an information outputting apparatus (BX);
obtaining the encrypted recording information from an information outputting apparatus (BX); and
recording the obtained encrypted recording information in the recording medium.

13. The information recording method according to claim 12, **characterized in that** the process of encrypting, which is included in the information outputting method, encrypts the recording information by the encryption processing carried out to the recording information by using the identification information (ID) when the recording information is recorded in the recording medium in the information recording apparatus, and the process of recording the obtained encrypted recording information records the obtained encrypted recording information in the recording medium in association with the identification information, which is used to generate the encrypted recording information.

14. An information recording medium, in which an information outputting control program for functioning a computer, which is included in an information outputting apparatus (BX) for outputting recording information to be recorded in a recording medium (1) by an information recording apparatus (R) to the information recording apparatus (R), is recorded readable by the computer,
**characterized in that** the information outputting control program makes the computer function as:
an obtaining device for obtaining identification information for identifying the recording medium from the information recording apparatus, an encryption device for encrypting the recording information by the use of the obtained identification information; and
an outputting device for outputting the encrypted recording information to the information recording apparatus.

15. The information recording medium according to claim 14, **characterized in that** the encryption device encrypts the recording information by the encryption processing carried out to the recording information by using the identification information when the recording information is recorded in the recording medium in the information recording apparatus.

16. An information recording medium, in which an information recording control program for functioning a recording computer, which is included in an information recording apparatus (BX) for recording the encrypted recording information outputted from an information outputting apparatus (R) in a recording medium (1), the information outputting apparatus (BX) including a computer functioning as: an obtaining device for obtaining identification information for identifying the recording medium from the information recording apparatus, an encryption device for encrypting the recording information by the use of the obtained identification information; and an outputting device for outputting the encrypted recording information to the information recording apparatus, the information recording control program recorded readable by the recording computer,
**characterized in that** the information recording control program makes the recording computer function as:
an identification information outputting device for outputting the identification information to the information outputting apparatus;
a recording information obtaining device for obtaining the encrypted recording information from the information outputting apparatus; and
a recording device for recording the obtained encrypted recording information in the recording medium

17. The information recording medium according to claim 16, **characterized in that** the encryption device encrypts the recording information by the encryption processing carried out to the recording information by using the identification information when the recording information is recorded in the recording medium in the information recording apparatus, and the recording device records the obtained encrypted recording information in the recording medium in association with the identification information, which is used to generate the encrypted recording information.
